# EUROPÄISCHE PATENTSCHRIFT

(11) **EP 2 534 797 B1**
(45) Veröffentlichungstag und Bekanntmachung des Hinweises auf die Patenterteilung: **18.04.2018**
(21) Anmeldenummer: 11705835.4
(22) Anmeldetag: 08.02.2011
(51) Int. Cl.: H04L 12/40

(54) **VERFAHREN UND BUSANSCHLUSSEINHEIT ZUM SELEKTIVEN AUFWECKEN VON TEILNEHMERN EINES BUSSYSTEMS**
METHOD AND BUS CONNECTION UNIT FOR SELECTIVELY WAKING USERS OF A BUS SYSTEM
PROCÉDÉ ET UNITÉ DE CONNEXION À UN BUS POUR LE RÉVEIL SELECTIF D'ABONNÉS D'UN SYSTÈME DE BUS

(30) Priorität: 07.02.2011 DE 102011003726; 08.02.2010 DE 102010007282
(43) Veröffentlichungstag der Anmeldung: 19.12.2012
(73) Patentinhaber: Robert Bosch GmbH, 70442 Stuttgart (DE)
(72) Erfinder: HARTWICH, Florian, 72762 Reutlingen (DE); RETTIG, Rasmus, 72760 Reutlingen (DE)
(86) Internationale Anmeldenummer: PCT/EP2011/051811
(87) Internationale Veröffentlichungsnummer: WO 2011/095637

(56) Entgegenhaltungen:
- EP-A2- 1 158 718
- WO-A1-2006/003540
- DE-A1- 10 358 584

## Beschreibung

### Stand der Technik

Heute verwendete CAN-Transceiver nach dem Stand der Technik weisen typischerweise zwei Modi auf, einen aktiven Modus für die Kommunikation und einen Sleep-Modus, das heisst einen stromsparenden Ruhezustand. Das auf dem jeweiligen CAN-Busteilnehmer ablaufende Applikations-Programm kann den gewünschten Betriebmodus einstellen, der Transceiver wechselt automatisch vom Sleep-Modus in den aktiven Modus, sobald er auf dem CAN-Bus ein dominantes Bit erkennt. Während der Transceiver im Sleep-Modus ist, kann der Rest des CAN-Busteilnehmers abgeschaltet sein und wird dann wieder eingeschaltet, wenn der CAN-Transceiver in den aktiven Modus wechselt. Ein selektives Schlafenlegen und/oder Aufwecken einzelner Transceiver und/oder CAN-Busteilnehmer über den CAN-Bus ist nach dem heutigen Stand der Technik nicht vorgesehen.

Im Zuge der Notwendigkeit, den Verbrauch elektrischer Energie in Fahrzeugen zu minimieren, ergibt sich die Entwicklungsaufgabe, einzelne CAN-Busteilnehmer, das heisst in der Regel Steuergeräte, selektiv abzuschalten oder schlafen zu legen und ebenfalls selektiv wieder aufzuwecken. Diese Steuergeräte sollen also nicht bei jedem dominanten Bit, das sie auf dem CAN-Bus erkennen, aufwachen, sondern nur bei Erkennung einer spezifischen Botschaft oder einer spezifischen Signalfolge auf dem CAN-Bus.

DE 103 58 584 A1 beschreibt ein zweistufiges Verfahren zur Dekodierung eines Wake-identifiers im Datenfeld einer CAN-Nachricht durch Auszählen von Flanken in der Botschaft bis zum Erreichen des Datenfeldes und anschließende Dekodierung durch Mustererkennung. Dadurch kann der CAN-Transceiver in vier Modi betrieben werden. Zusätzlich zu den vorher beschriebenen Modi kommen noch ein weiterer Spar-Modus und ein Zwischen-Modus. Aus dem Sleep-Modus wechselt der Transceiver automatisch in den Spar-Modus, sobald er auf dem CAN-Bus ein dominantes Bit erkennt. Im Spar-Modus erfasst er eine Signaleigenschaft und wechselt in den Zwischen-Modus, wenn er innerhalb einer vorgegebenen Zeitspanne eine Anzahl von Signaleigenschaften, beispielsweise Flanken, erkennt. Aus dem Zwischen-Modus wechselt er erst dann in den aktiven Modus, sobald er in dem 8 byte langen Datenfeld der CAN-Botschaft, das er hierzu nach einem spezifischen Verfahren dekodiert, ein bestimmtes Muster erkennt. Das Weck-Muster wird für jeden CAN-Transceiver konfiguriert. Wenn der Transceiver das Weck-Muster in der Botschaft nicht erkennt, geht er in den Spar-Modus zurück. Im Zwischen-Modus ist der Stromverbrauch nur geringfügig höher als im Spar-Modus, der Rest des CAN-Knotens kann abgeschaltet bleiben.

Dadurch werden CAN-Netzwerke mit so genanntem Teilnetzbetrieb möglich, in denen einzelne Knoten kontrolliert im stromsparenden Spar-Modus verbleiben, während die anderen Knoten über den CAN-Bus kommunizieren. Die einzelnen Knoten können selektiv mittels einer individuellen CAN-Botschaft, der Weck-Botschaft, aus dem Spar-Modus wieder aufgeweckt werden. Dies wird selektiver Wakeup genannt. Es können auch mehrere Weck-Botschaften für einen Knoten konfiguriert werden.

WO2006/003540 A1 beschreibt ein anderes Verfahren zur Erkennung von Weck-Signalen, bei welchem die Dauer von aufeinander folgenden dominanten und rezessiven Phasen verglichen wird und daraus jeweils die Information ,1', ,0' oder ,ungültig' erkannt wird. Hierbei wird der kontinuierliche Bitstrom auf dem Bus gelesen, ohne Berücksichtigung des Nachrichtenformats.

### Offenbarung der Erfindung

Eine weitere Forderung an den Teilnetzbetrieb besteht neben der genannten Möglichkeit zum selektiven Ansprechen einzelner Teilnehmer in der Eineindeutigkeit der Weckbotschaften für das selektive Wecken. Die normale Buskommunikation zwischen anderen aktiven Busteilnehmern mit im Prinzip beliebigen Nachrichten darf auf keinen Fall zum ungewollten Aufwecken führen. Die oben beschriebenen Verfahren adressieren diese Anforderung nicht. In beiden Fällen sind neben einer definierten und gewollten Botschaft weitere Nachrichten konstruierbar, die ebenfalls zum Aufwecken führen könnten.

### Vorteile der Erfindung

Das hier beschriebene Verfahren gewährleistet, dass ein Teilnehmer ausschließlich durch die (eine oder mehrere) für ihn definierte individuelle Weck-Botschaft geweckt wird. Es garantiert die eineindeutige Zuordnung von Botschaften zu Teilnehmern. Das Verfahren wird am Beispiel eines CAN-Netzwerkes beschrieben, es funktioniert jedoch sinngemäß neben dem CAN-Protokoll mit allen Netzwerkprotokollen mit strukturierten Botschaften und begrenzter maximaler Botschaftslänge.

Das Verfahren wird vorteilhafterweise in einer Busanschlusseinheit durchgeführt, welche Mittel aufweist, die geeignet sind, das Verfahren durchzuführen. Diese Mittel können beispielsweise Bauelemente umfassen, mittels welcher Signaleigenschaften wie zum Beispiel Flanken erkannt und gezählt werden. Weiterhin sind zur Ausführung des Verfahrens beispielsweise Mittel vorzuhalten, durch welche Zeitabstände zwischen dem Auftreten bestimmter Signaleigenschaften, beispielsweise zwischen Flanken, ermittelt und abgespeichert werden können, also beispielsweise Zähler in Verbindung mit einem geeigneten Taktgeber und Register oder Speicherzellen. Weiterhin von Vorteil sind Mittel zur Bestimmung des aktuellen Buspegels zu bestimmten Zeitpunkten. Geeignete Mittel zur Durchführung dieser Aufgaben sind aus dem Stand der Technik bekannt und können in Verbindung mit geeigneten Spannungsreglern für die einzelnen Bauelemente und Mittel zu einer Vorrichtung, mit welcher das erfindungsgemäße Verfahren durchgeführt werden kann, zusammengefügt werden.

Das erfindungsgemäße Verfahren geht aus von dem zweistufigen Verfahren, welches in der Druckschrift DE 103 58 584 A1 beschrieben ist, welche durch die Referenzierung dem Offenbarungsgehalt dieser Schrift hinzugefügt wird.

Eine Eigenschaft des dort beschriebenen Verfahrens ist, dass zur Erfassung der Signaleigenschaft im Spar-Modus noch kein Taktsignal eines präzisen Oszillator notwendig ist, wie es beispielsweise zur bitweisen Auswertung einer CAN-Botschaft erforderlich ist. Es werden im dargestellten Beispiel lediglich Flankenwechsel gezählt. Es sind jedoch Fälle denkbar, in denen nach Zählen der erforderlichen Anzahl von Flanken durch eine zufällig passende Nachricht die sich anschließende Auswertung der codierten Information im Zwischen-Modus fälschlicherweise zu einem positiven Ergebnis kommt.

Vorteilhafterweise wird daher das Verfahren zu einem wenigstens dreistufigen Verfahren ergänzt. Für das in der Schrift DE 103 58 584 A1 gewählte Beispiel eines CAN-Netzwerkes wird zusätzlich zu der Codierung eines Weck-Musters im 8 byte langen Datenfeld der Weck-Botschaft das Arbitrations-Feld ebenfalls besonders codiert, beziehungsweise auf bestimmte, für das Verfahren vorteilhafte Werte eingeschränkt. Vorteilhafterweise wird das Arbitrationsfeld und das sich anschließende Control Field mit dem Data Length Code in zwei Teile unterteilt, welche im Rahmen der Auswertung, die von Teilnehmern im Spar-Modus durchgeführt wird, in zwei aufeinander folgenden Phasen unterschiedlich ausgewertet werden. In der dritten Phase (Zwischen-Modus) wird dann das Weckmuster aus dem Datenfeld decodiert. Abhängig von den in den drei Phasen ermittelten Informationen wird der jeweilige Ruhezustand (Sleep-, Spar- oder Zwischen-Modus) verlassen, oder nicht.

In der ersten Phase (Phase 1: Initialisierung) werden Signaleigenschaften, insbesondere Flankenwechsel gezählt. Es ist kein Oszillator zur Zeitmessung notwendig. Vorteilhafterweise wird abhängig vom Vergleich der gezählten Signaleigenschaften mit einer vorgegebenen oder vorgebbaren Anzahl von Signaleigenschaften der Aufweckvorgang weitergeführt, oder nicht.

In der sich anschließenden zweiten Phase (Phase 2: Synchronisationsmuster-Detektion) werden Zeitabstände zwischen Flankenwechseln und/oder deren Verhältnis gemessen. Hierfür ist ein Oszillator notwendig, der jedoch relativ ungenau sein kann, da beispielsweise lediglich überprüft wird, ob die nacheinander gemessenen Zeiten in einem festgelegten Verhältnis zueinander stehen. Das heisst, die Abfolge der Flankenwechsel muss ein vorgegebenes Muster ("Synchronisationsmuster", "Synchronisation-Pattern") ergeben. Vorteilhafterweise wird abhängig vom Vergleich der gemessenen Folge von Zeitabständen und/oder deren Verhältnis mit einer vorgegebenen oder vorgebbaren Folge der Aufweckvorgang weitergeführt, oder nicht.

Das Synchronisationsmuster ist vorteilhafterweise so gewählt, dass die dem Synchronisationsmuster entsprechende Folge von Zeitabständen innerhalb einer mit dem Kommunikationsprotokoll konformen Nachricht so darstellbar ist, dass mindestens zwei Zeitabstände oder das Verhältnis zweier der Zeitabstände durch das Protokoll vorgegeben sind. Dadurch wird in einer protokollkonformen Nachricht aufgrund von Randbedingungen, welche das jeweils verwendete Protokoll vorgibt, ein zufällig positives Ergebnis bei der Auswertung der codierten Information im Zwischen-Modus zuverlässig verhindert.

In einer vorteilhaften Ausprägung in einem CAN-Netzwerk umfasst das Synchronisationsmuster die reservierten Bits vor Beginn des Data Length Code. Eine von der vorgesehenen Weckbotschaft abweichende Botschaft (z.B. mit einer fehlenden Flanke im Identifier) führt zu einem Versatz in der Position der reservierten Bits innerhalb der in Phase 2 ausgewerteten Bits, somit zu einer abweichenden Folge der Zeitabstände der Flankenwechsel und damit zum Verwerfen der Nachricht hinsichtlich der Weckfunktion.

Für das dargestellte Beispiel in einem CAN-Netzwerk ist das Synchronisationsmuster vorteilhafterweise so gewählt, dass es frühestens mit einem Versatz von 20 Bits gegenüber der Soll-Position innerhalb eines protokollkonformen Datenrahmens zufällig auftreten kann. Es wird erfindungsgemäß durch geeignete Wahl der Anzahl zu zählender Signaleigenschaften und des nachfolgenden Synchronisationsmusters sichergestellt, dass bei fehlerhaftem beziehungsweise zufälligem Durchlaufen dieser beiden Phasen die verbleibende Nachrichtenlänge nicht mehr ausreicht, um das codierte individuelle Weckmuster unterzubringen.

Insbesondere ist es vorteilhaft, hierzu die in der ersten Phase zu ermittelnde Anzahl von Signaleigenschaften als die bezogen auf das Kommunikationsprotokoll maximal mögliche Anzahl vorzugeben und/oder die in der zweiten Phase zu ermittelnde Folge von Zeitabständen als die Folge der bezogen auf das Kommunikationsprotokoll kürzestmöglichen Zeitabstände vorzugeben.

An die zweite Phase schließt sich die dritte Phase (Phase 3: Weckmuster-Detektion) an. Vorteilhafterweise wird im dargestellten Beispiel eines CAN-Netzwerkes durch das Synchronisationsmuster der Beginn des Datenfeldes markiert. Die dritte Phase, also die Weckmuster-Detektion, erfolgt dann als Auswertung des Datenfeldes, welche in Anlehnung an das Verfahren aus der Anmeldung DE 103 58 584 A1 erfolgen kann. Es kann aber auch vorteilhafterweise ein demgegenüber modifiziertes Verfahren eingesetzt werden, welches in einem Ausführungsbeispiel dieser Schrift beschrieben wird und eine höhere Sicherheit bezüglich fehlerhaftem Aufwecken aufweist.

Erfindungsgemäß werden zum Ermitteln der in der dritten Phase zu ermittelnden Folge von logischen Informationen für jede logische Information mehrere Bits einer Nachricht ausgewertet, wobei ein weiterer Zeitabstand zwischen Signaleigenschaften und/oder Flanken und/oder Flankenwechseln bestimmt wird und anschliessend der Signalpegel des Busses an einem ersten Abtastzeitpunkt und an einem zweiten Abtastzeitpunkt abgetastet wird, wobei der erste und/oder der zweite Abtastzeitpunkt abhängig von dem bestimmten weiteren Zeitabstand sind, und abhängig vom Ergebnis der wenigstens zwei Abtastungen die logische Information abgeleitet wird.

Besonders vorteilhaft ist es, wenn am ersten und/oder zweiten Abtastzeitpunkt eine Mehrfachabtastung durchgeführt wird, wobei der oder die Zeitabstände zwischen den Zeitpunkten der mehrfachen Abtastung kleiner als der Zeitabstand zwischen dem ersten und dem zweiten Abtastzeitpunkt ist.

In einer bevorzugten Ausprägung werden für die Ermittlung jeder einzelnen logischen Information der Folge von logischen Informationen jeweils acht Bits der Nachricht ausgewertet. Der Zeitabstand zwischen dem ersten und dem zweiten Abtastzeitpunkt und/oder der Zeitabstand zwischen der letzten zur Ermittlung des weiteren Zeitabstandes herangezogenen Signaleigenschaft und/oder Flanke und/oder Flankenwechsel und dem ersten Abtastzeitpunkt entsprechen in einer bevorzugten Ausführungsform ungefähr dem ermittelten weiteren Zeitabstand.

Die Erfindung ist durch das Verfahren nach Anspruch 1 und die Vorrichtung nach Anspruch 13 definiert.

### Zeichnungen

Die Erfindung wird im weiteren anhand der Abbildungen näher erläutert.
Abbildung 1 zeigt den Ablauf des Verfahrens nach dem Stand der Technik.
Abbildung 2 zeigt den Ablauf des Verfahrens gemäß der vorliegenden Erfindung.
Abbildung 3.1 zeigt die Aufteilung der Nachrichten in Bereiche, die in den einzelnen Phasen des Verfahrens ausgewertet werden.
Abbildung 3.2 zeigt ein Beispiel für eine Weck-Nachricht und deren Auswertung in der ersten und zweiten Phase des Verfahrens.
Die Abbildung 4.1 beschreibt verschiedene Beispiele für Nachrichten-Identifier, welche für die Initialisierung in Phase 1 und die Synchronisation in Phase 2 geeignet sind.
Abbildungen 5.1 zeigt, wie das erfindungsgemäße Synchronisations-Muster sicherstellt, dass das Dekodieren des Weck-Musters aus dem Datenfeld in Phase 3 rechtzeitig begonnen wird.
Die Abbildungen 5.2 und 5.3 zeigen beispielhaft, dass nach zufälligem Erkennen eines Synchronisations-Musters im Datenfeld die verbleibenden Bits der Nachricht nicht mehr ausreichend Platz für ein Weck-Muster lassen.
Die Abbildungen 6.1 und 6.2 beschreiben ein Ausführungsbeispiel für das Dekodieren des Weck-Musters in Phase 3.

### Beschreibung der Ausführungsbeispiele

Im Weiteren werden Ausführungsbeispiele für das erfindungsgemäßes Verfahren und die Vorrichtung beschrieben. Diese konkreten Beispiele werden zur Erläuterung der Ausführung eingesetzt, beschränken aber nicht den Umfang des Erfindungsgedankens.

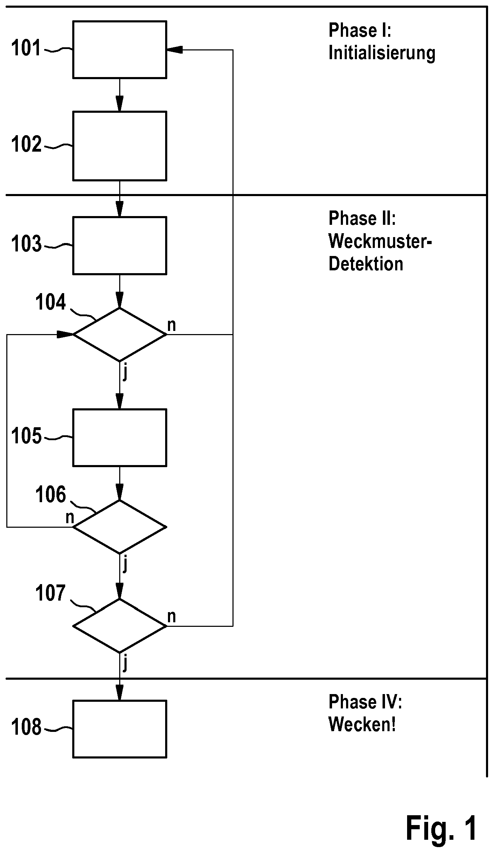

Die Abbildung 1 zeigt den Ablauf des Verfahrens nach dem Stand der Technik. Eine erste Phase dient zur Initialisierung. Zunächst wird im Block 101 der Beginn einer Nachricht an einer von rezessiv nach dominant fallenden Flanke erkannt. Es werden im Anschluss daran im Block 102 fallende Flanken gezählt, bis eine Anzahl von beispielsweise 8 erreicht ist. In der zweiten Phase erfolgt die Detektion des Weckmusters. Hierbei werden beispielsweise insgesamt 8 Bits nach dem beschriebenen Verfahren aus dem Datenfeld der Nachricht ausgelesen. In einem ersten Schritt 103 wird die ersten 8 Bits des Datenfeldes anaysiert. In einem zweiten Schritt 104 wird jedes Bit auf Gültigkeit überprüft. Bei festgestellter Gültigkeit wird der decodierte Wert des Bits im Schritt 105 gespeichert, andernfalls wird das Weck-Verfahren abgebrochen. Sind 8 gültige Bits decodiert, was in Schritt 106 geprüft wird, wird in Schritt 107 das decodierte Muster mit einem abgelegten Weckmuster verglichen. Bei Übereinstimmung wird in Schritt 108 der Aufweckvorgang eingeleitet.

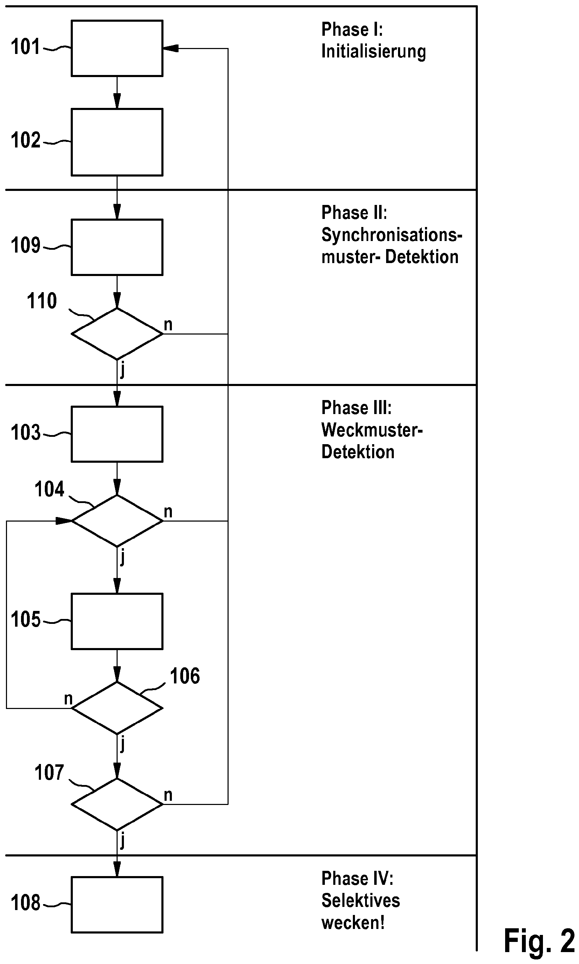

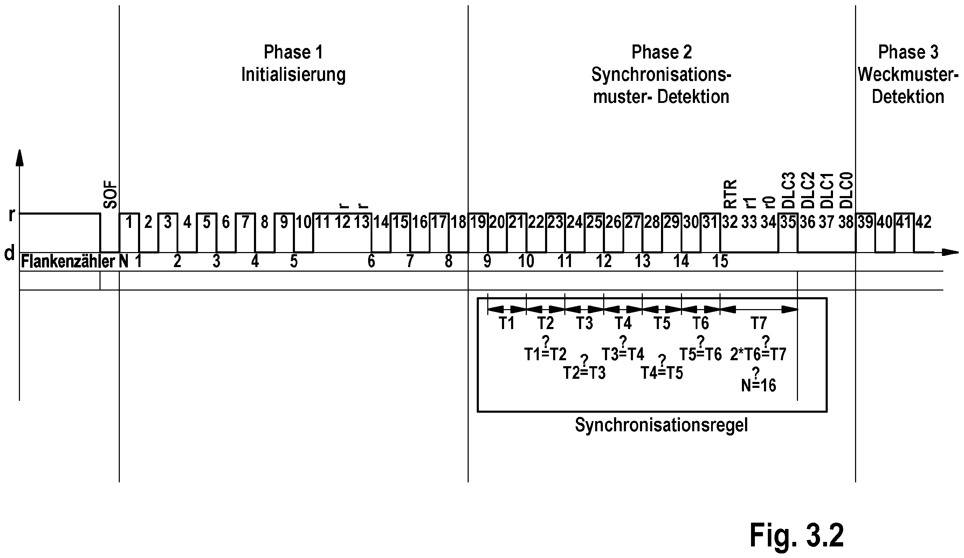

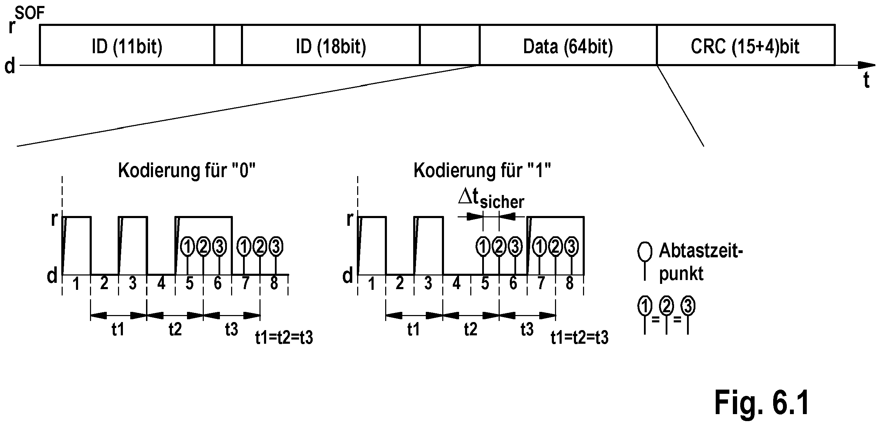

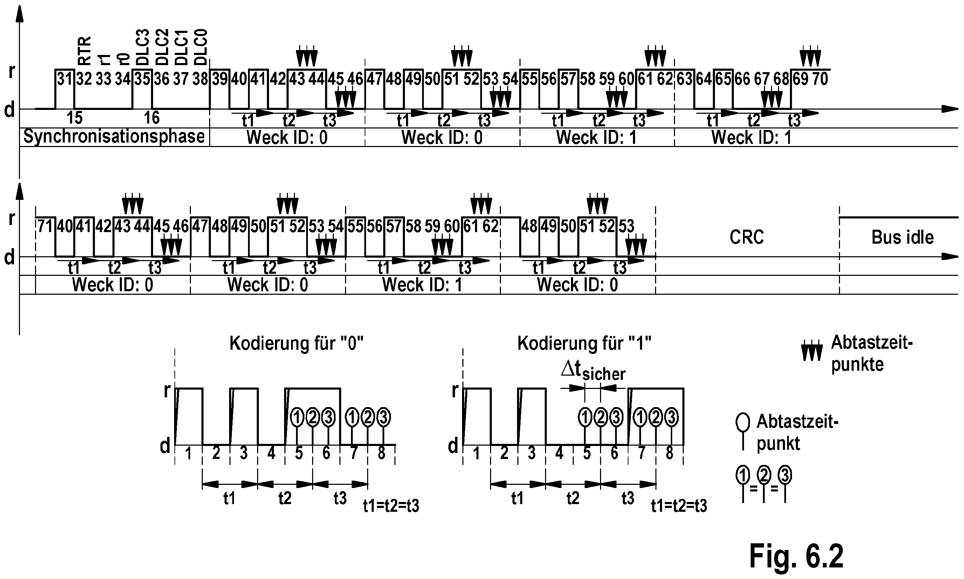

Demgegenüber ist in Abbildung 2 das erweiterte Verfahren dargestellt. Die erste Phase des Verfahrens mit den Schritten 101 und 102 entspricht dem Vorgehen aus dem Stand der Technik, das in Abbildung 1 erläutert wurde. Nachdem beispielsweise 8 fallende Flanken gezählt wurden, beginnt im Verfahren eine zweite Phase, welche sich in zwei Schritte aufteilen läst. Zunächst wird in einem Schritt, der durch den Block 109 symbolisiert ist, der Inhalt der Nachricht mit einem vorgegebenen Synchronisationsmuster verglichen. Hierzu wird wie im Zusammenhang mit Abbildung 3.2 noch näher erläutert wird, eine Folge von Zeitabständen (T1, T2, ...) zwischen Signaleigenschaften und/oder Flanken und/oder Flankenwechseln ermittelt. Diese wird in Block 110 mit einem vorgegebenen Muster beziehungsweise einer vorgegebenen oder vorgebbaren Folge von Zeitabständen oder einer vorgegebenen oder vorgebbaren Folge von Verhältnissen von Zeitabständen verglichen. Bei Erkennen des vorgegebenen Synchronisationsmusters beginnt die dritte Phase mit den Schritten 103 bis 107, in der die Detektion des Weckmusters erfolgt. Die Detektion des Weckmusters erfolgt wieder durch Decodierung einzelner Bits aus dem Datenfeld, wobei das verwendete Verfahren demjenigen aus dem genannten Stand der Technik entsprechen kann, oder auch modifiziert werden kann. Ein Beispiel für ein modifiziertes Verfahren ist im Zusammenhang mit den Abbildungen 6.1 und 6.2 ausgeführt. Abhängig vom Ergebnis der Decodierung wird der Aufweckvorgang in Schritt 108 eingeleitet.

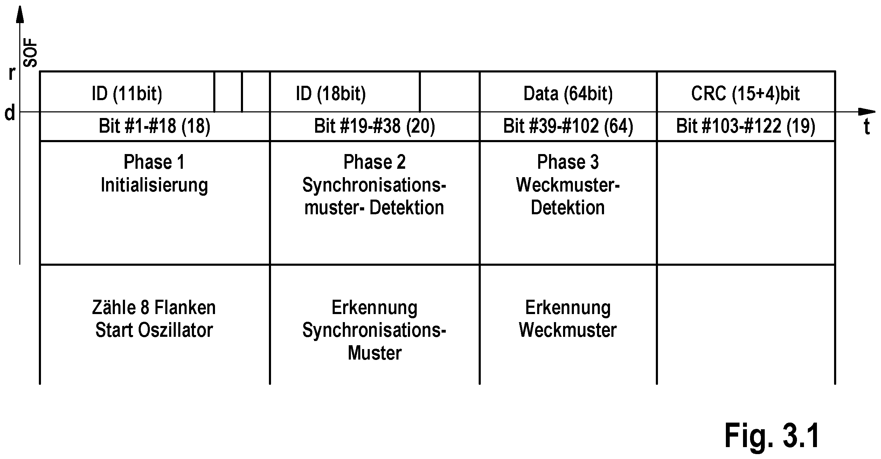

In Abbildung 3.1 ist beispielhaft dargestellt, wie eine CAN-Nachricht im Verfahren phasenweise ausgewertet wird. Nach dem "Start of Frame"-Bit SOF werden in diesem Beispiel die ersten 18 Bits ausgewertet, indem die Anzahl N fallender Flanken von rezessivem nach dominantem Buspegel gezählt wird. Gleichzeitig wird in dieser Phase der Oszillator gestartet, der für spätere Phasen benötigt wird und sich während Phase 1 stabilisieren kann. Die folgenden 20 Bits werden im hier dargestellten Ausführungsbeispiel für die Durchführung der zweiten Phase des Verfahrens herangezogen, in welcher das Auftreten eines vorgegebenen oder vorgebbaren Synchronisationsmusters in der Nachricht ausgewertet wird. Es folgen weitere 64 Bit, entsprechend dem Datenfeld der CAN-Nachricht, welche im dargestellten Ausführungsbeispiel zur Erkennung des Weckmusters in der dritten Phase herangezogen werden. Die restlichen Bits der CAN Nachricht, das heißt CRC und Acknowledge, werden nicht speziell für das erfindungsgemäße Aufweck-Verfahren herangezogen. Sie folgen den vom Protokoll vorgegebenen Regeln, so dass die Wecknachrichten für andere, bereits aktive Busteilnehmer als protokollgemäße Nachrichten angesehen werden und es nicht zur Auslösung von Fehlerbenachrichtigungen kommt.

In Abbildung 3.2 ist ein Ausführungsbeispiel für den führenden Abschnitt einer Wecknachricht dargestellt. Nach dem führenden Bit SOF, das den Beginn der Nachricht signalisiert, schließen sich 18 Bits an, welche in der ersten Phase (Initialisierung) ausgewertet werden. Die Werte dieser 18 Bits sind hier so gewählt, dass acht fallende Flanke auftreten. Die Bits Nummer 12 und 13 sind durch das CAN-Protokoll festgelegt, die Werte der anderen Bits sind so gewählt, dass eine maximale Anzahl von Flanken auftritt. Eine andere Wahl der Werte ist möglich, wie in Zusammenhang mit der Abbildung 3.3 noch näher ausgeführt wird.

Es schließen sich in der in Abbildung 3.2 dargestellten Wecknachricht 20 weitere Bits an, welche zum Erkennen eines Synchronisationsmusters herangezogen werden. Im dargestellten Beispiel ist das Synchronisationsmuster so gewählt, dass zunächst sieben fallende Flanken mit gleichem Zeitabstand aufeinander folgen, und danach eine achte fallende Flanke nach Ablauf des doppelten Zeitabstandes auftritt. Bei dem erfindungsgemäßen Verfahren werden im dargestellten Beispiel die Zeitabstände T1, T2, T3, T4, T5, T6, T7 zwischen den fallenden Flanken gemessen und miteinander verglichen.

Es treten im dargestellten Beispiel sechs gleiche Zeitabstände (T1, T2, T3, T4, T5, T6) auf, gefolgt von einem siebten Zeitabstand, der den doppelten Wert beträgt: T7 = 2 x T6. Erfindungsgemäß wird ausgenutzt, dass die Werte der Bits Nr. 32 bis Nr. 34 durch das CAN-Protokoll festgelegt sind. Dadurch und wegen der Randbedingungen, die für den Data Length Code gelten, kann ein identisches Synchronisationsmuster innerhalb einer CAN-Nachricht erst wieder im Datenfeld auftreten, welches mit Bit Nr. 39 beginnt. Es könnten auch andere Werte für die vorangehenden Bits Nr. 19 bis Nr. 31 gewählt werden, sofern gewährleistet ist, dass das resultierende Muster nicht mit einem Versatz von weniger als 20 Bits in einer protokollkonformen CAN-Nachricht auftreten kann.

Zusätzlich kann, wie in Abbildung 3.2 dargestellt, im Rahmen des Weckverfahrens noch die Gesamtanzahl N der seit dem "Start of Frame"-Bit registrierten fallenden Flanken in der CAN-Nachricht überprüft werden. Der Flankenzähler, welcher in der ersten Phase des Verfahrens zum Einsatz kommt, läuft dann einfach weiter, wie in den Abbildungen dargestellt. Als zusätzlichen Bedingung für das Wecken wird gefordert, dass der Zähler in der zweiten Phase midestens einen bestimmten, vorgegebenen oder vorgebbaren Wert erreichen muss. (Der Übersichtlichkeit halber sind in den Abbildungen nicht alle zu zählenden Flanken beschriftet, sondern die Beschriftung endet bei 14 oder 15 Flanken.) Im dargestellten Ausführungsbeispiel der Abbildung 3.2 würden nach Bit 35 insgesamt 16 fallende Flanken aufgetreten sein. Es könnte als zusätzliche Weck-Bedingung also die Detektion einer Anzahl N = 16 von Flanken gefordert werden.

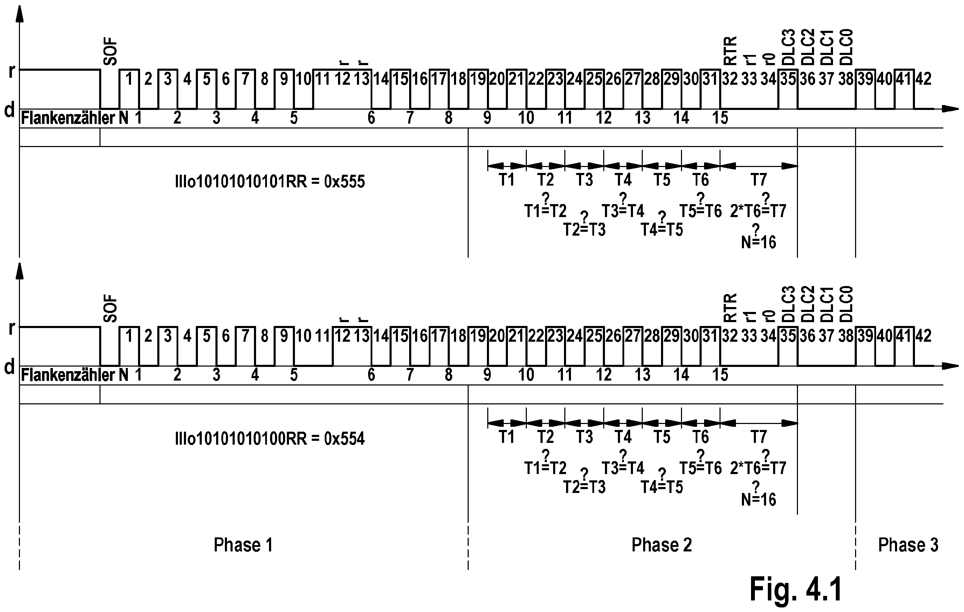

Abbildung 4.1 zeigt verschiedene Ausführungsbeispiele für Identifier von erfindungsgemäßen CAN-Nachrichten. Wie gezeigt ist, können sich die Identifier in dem Bereich, der in der ersten Phase ausgewertet wird, unterscheiden, und zwar so, dass die Anzahl fallender Flanken gleich bleibt. Beispielsweise kann gegenüber dem Beispiel aus Abbildung 3.2 der Wechsel von dominant nach rezessiv erst nach Bit Nr. 11 erfolgen. Gleichermaßen könnte der Wechsel von rezessiv nach dominant gegenüber letzterem Beispiel verschoben werden, so dass er erst nach Bit Nr. 10 erfolgt, und so weiter. Nachfolgend sind zur Erläuterung die auf diese Weise darstellbaren Identifier aufgeführt:

| Binär | Hexadezimal | Hexadezimal |
|---|---|---|
| Bit Nr. 1 - 11 | Bit Nr. 1 - 11 & 14 - 31 | Identifier |
| 10101010101 | 0x555h & 0x15555h | 0x15555555h |
| 10101010100 | 0x554h & 0x15555h | 0x15515555h |
| 10101010110 | 0x556h & 0x15555h | 0x15595555h |
| 10101010010 | 0x552h & 0x15555h | 0x15495555h |
| 10101011010 | 0x55Ah & 0x15555h | 0x15695555h |
| 10101001010 | 0x54Ah & 0x15555h | 0x15295555h |
| 10101101010 | 0x56Ah & 0x15555h | 0x15A95555h |
| 10100101010 | 0x52Ah & 0x15555h | 0x14A95555h |
| 10110101010 | 0x5AAh & 0x15555h | 0x16A95555h |
| 10010101010 | 0x4AAh & 0x15555h | 0x12A95555h |
| 11010101010 | 0x6AAh & 0x15555h | 0x1AA95555h |
| 01010101010 | 0x2AAh & 0x15555h | 0x0AA95555h |

Die Werte der Bits Nr. 14 bis Nr. 38 bleiben bei dieser Variation unverändert. Eine Eigenschaft, die alle erfindungsgemäßen Identifier teilen, ist, dass innerhalb der in der ersten Phase ausgewerteten Bits, im dargestellten Beispiel also innerhalb der Bits Nr. 1 bis Nr. 18, die im Pahmen der Protokollvorgaben maximal mögliche Anzahl an fallenden Flanken dargestellt wird.

Der Effekt der erfindungsgemäß getroffenen Auswahl von Identifiern auf die Sicherheit bezüglich fehlerhaftem Aufwecken liegt darin, dass keine CAN-Nachricht auftreten kann, in welcher früher als in der Wecknachricht die vorgegebene Anzahl fallender Flanken erreicht wird. Dementsprechend kann auch nicht früher als mit Bit Nr. 19 die zweite Phase des Weckverfahrens beginnen und das vorgegebene Synchronisationsmuster zufällig in einer CAN-Nachricht erkannt werden, was zu fehlerhaften Weckvorgängen führen könnte.

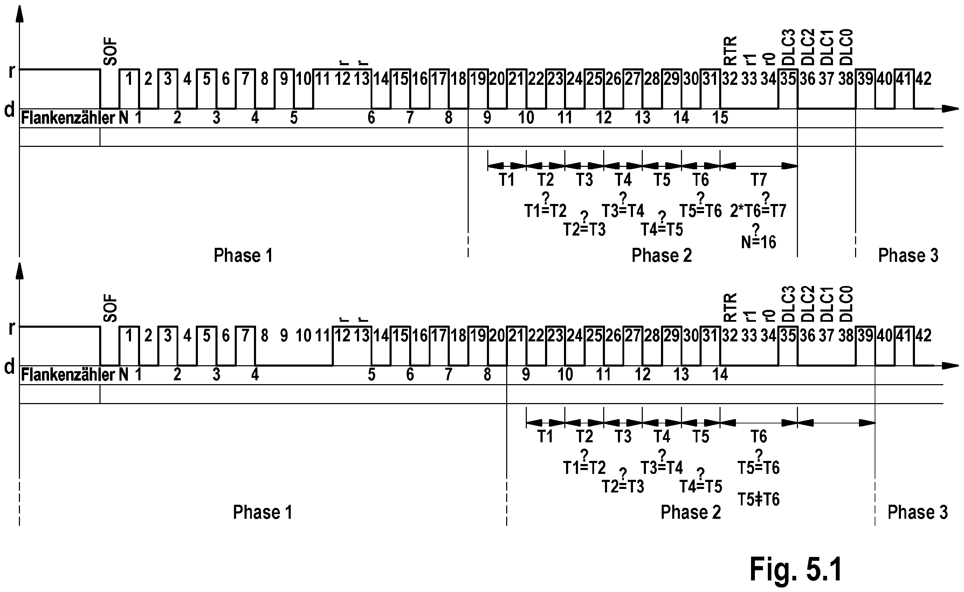

Abbildung 5.1 zeigt einen weiteren Effekt der getroffenen Auswahl von Identifiern auf die Sicherheit bezüglich fehlerhaftem Aufwecken. Jede gegenüber dieser Auswahl abweichende Nachricht mit einer geringeren Anzahl von fallenden Flanken innerhalb der ersten 18 Bits führt zu einem dementsprechend späteren Beginn der zweiten Phase. Wegen der festgelegten Werte der Bits Nr. 32 bis Nr. 34 und dem Data Length Code in den Bits Nr. 35 bis Nr. 38 ist der beobachtete Zeitabstand T6 nicht gleich dem zuvor beobachteten Zeitabstand T5: T6 ≠ T5. Auch der gemessene Zeitabstand T7 gehorcht nicht der Vorgabe, es gilt vielmehr T7 ≠ 2 x T6. Es tritt also kein passendes Synchronisationsmuster auf und es erfolgt kein Weckvorgang. Es kann also im dargestellten Beispiel grundsätzlich kein passendes Synchronisationsmuster in der CAN-Nachricht auftreten, das früher als mit Bit Nr. 39 beginnt.

Eine weitere mögliche Variation besteht in der Invertierung aller Werte der Bits Nr. 14 bis Nr. 30, was eine Anpassung der zu zählenden fallenden Flanken N und der erwarteten Zeitabstände T1, T2, ... im Synchronisationsmuster nach sich ziehen würde. In diesem Beispiel wäre es weiterhin gegeben, dass das Synchronisationsmuster in einer protokollkonformen Nachricht frühestens mit einem Versatz von 20 Bits auftreten könnte.

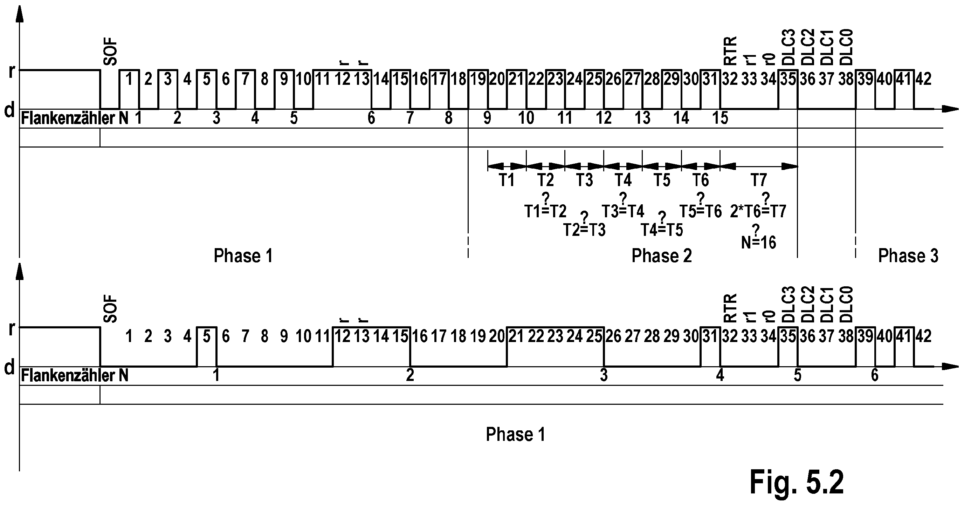

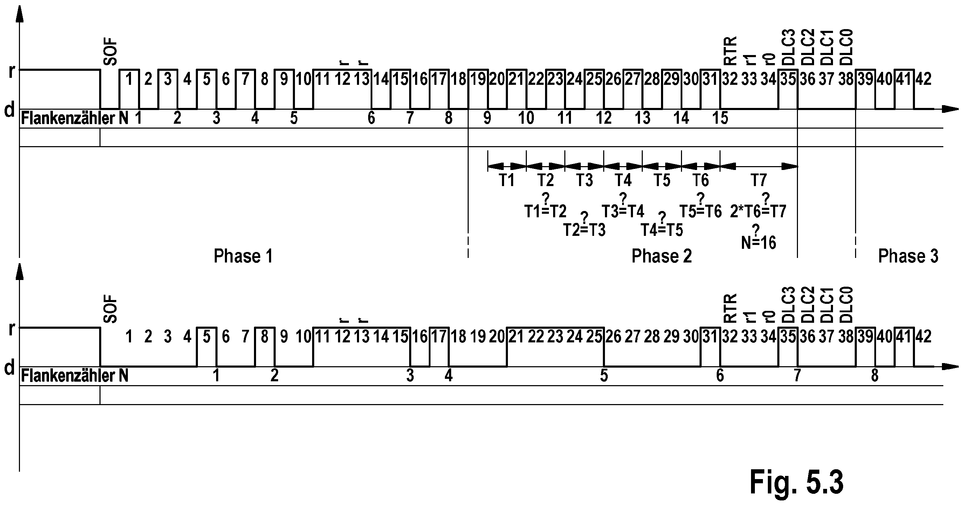

Die Abbildungen 5.2 und 5.3 zeigen zwei Beispiele einer CAN-Nachricht, bei der die in der ersten Phase vorgegebene Anzahl von fallenden Flanken erst nach Ablauf von Bit Nr. 39 oder später erreicht wird. In diesem Fall wäre, da die Bits des Datenfeldes keiner Einschränkung durch das CAN-Protokoll unterliegen, es grundsätzlich möglich, dass ein korrektes Synchronisationsmuster im weiteren Verlauf der CAN-Nachricht auftritt. Jedoch wäre aufgrund der begrenzten Länge der CAN-Nachrichten in diesem Fall nicht mehr ausreichend Platz in der CAN-Nachricht, um nach dem Synchronisationsmuster auch noch das Weckmuster, welches in der dritten Phase ausgewertet wird, in der Nachricht unterzubringen, da Synchronisationsmuster (20 Bit) und Weckmuster (64 Bit) 84 Bits umfassen, in der CAN-Nachricht ab Bit Nr. 39 jedoch nur noch das in desem Fall aus 64 Bit bestehende Datenfeld und das inklusive möglicher Stuff-Bits maximal 19 Bit umfassende CRC-Feld zur Verfügung stehen. Auch durch die hier gezeigte CAN-Nachricht würde also kein Weckvorgang durchgeführt werden.

Insgesamt ist damit gezeigt, dass durch die erfindungsgemäße Wahl der Identifier beziehungsweise der Anzahl von fallenden Flanken in Phase eins, nämlich als die maximal mögliche Anzahl von Flanken, sichergestellt ist, dass nur die für die Weckaufgabe vorgesehene Nachricht mit dem entsprechenden Identifier rechtzeitig, nämlich im dargestellten Fall mit Ablauf von Bit Nr. 18, die vorgegebene Anzahl von fallenden Flanken aufweist. Durch die Wahl des Synchronisationsmusters, insbesondere durch den Einbau von Nachrichtenabschnitten, die durch das Protokoll vorgegeben sind, ist sichergestellt, dass ein zufällig passendes Synchronisationsmuster frühestens mit einem Versatz von 20 Bits in einer CAN-Nachricht auftauchen kann. Durch die maximal mögliche Nachrichtenlänge (unter Berücksichtigung von Stuff-Bits) ist schließlich sichergestellt, dass auch eine CAN-Nachricht mit einem um mindestens 20 Bits versetzten, zufällig passenden Synchronisationsmuster keinen erfolgreichen Weckvorgang auslösen kann.

In Abbildung 6.1 ist ein Beispiel für die Decodierung des Weckmusters aus den 64 Bits des Datenfeldes dargestellt. Das Verfahren ist verwandt zu dem Verfahren aus dem Stand der Technik DE 103 58 584 A1, welche durch die Referenzierung dem Offenbarungsgehalt dieser Schrift hinzugefügt ist. Auch Mischformen zwischen dem dort beschriebenen und dem in dieser Schrift beispielhaft genannten Verfahrens sind zur Dekodierung des Weckmusters denkbar. Im dargestellten Beispiel wird bei einer CAN-Nachricht zur Erkennung des Weckmusters aus jeweils acht Bits des Datenfeldes eine logische Information ermittelt. Die acht logischen Informationen aus dem 8 Byte umfassenden Datenfeld ergeben dann ein ermitteltes Muster, welches mit dem vorgegebenen oder vorgebbaren Weckmuster verglichen wird. Abhängig von dem Vergleich wird über die Weiterführung des Aufweckvorganges entschieden.

Im hier dargestellten Ausführungsbeispiel wird zur Ermittlung der logischen Information in einem ersten Schritt mittels zweier fallender Flanken eine Zeitspanne t1 gemessen, welche für die weitere Auswertung genutzt wird. Hierzu müssten die ersten vier Bits jedes Bytes innerhalb des Datenfeldes in die Werte "r d r d" haben, wobei "r" für rezessiv und "d" für dominant steht. Gleichermaßen könnte man jedoch auch die Messung der Zeitspanne t1 auf die steigenden Flanken abstützen. Anstelle der verwendeten Bit Folge "r d r d" könnte auch die Bit Folge "d r d r" zum Einsatz kommen. Alternativ könnte, wie im Stand der Technik dargestellt, eine steigende und eine fallende Flanke zur Zeitmessung herangezogen werden, wobei die Bitfolge beispielsweise "d r r d" lauten würde.

Im dargestellten Beispiel erfolgt die Ermittlung der logischen Information weiterhin, indem in einem zweiten Schritt nach Ablauf einer Zeitspanne t2, welche ungefähr t1 entspricht, und nach weiterem Ablauf einer Zeitspanne t3, die ungefähr t1 entspricht, jeweils der Buspegel ermittelt wird. Ist der nach der Zeitspanne t2 ermittelte Buspegel rezessiv und der nach t3 ermittelte Buspegel dominant, wird das Byte als eine logische "0" erkannt. Liegt nach t2 ein dominanter Buspegel und nach t3 ein rezessiver Buspegel vor, wird eine logische "1" erkannt. Für den Fall, dass nach Ablauf der Zeitspannen t2 und t3 derselbe Buspegel gemessen wird, wird das Byte verworfen und die Decodierung abgebrochen. Es kommt nicht zum Aufwecken. Selbstverständlich ist auch eine umgekehrte oder abweichende Interpretation der ausgelesenen Bytes als binäre Daten möglich, es muss lediglich eine eindeutige Zuordnung der vier möglichen Kombinationen der nach t2 und nach t3 ausgelesenen Pegel auf die Werte "0", "1" und "ungültig" geben.

In Abbildung 6.1 ist weiterhin dargestellt, wie das Verfahren robuster gegenüber fehlerhaftem Aufwecken gestaltet werden kann, indem die Buspegel nach den beiden Zeitspannen jeweils mehrfach abgetastet werden. In der Abbildung ist beispielsweise eine dreifache Abtastung vorgesehen. Es kann aber auch zweifach, vierfach, etc. abgetastet werden. Der Abstand Δt_safe zwischen den Abtastungen kann entweder als prozentualer Wert der ermittelten ersten Zeitspanne t1, oder als fest vorgegebener oder vorgebbarer Wert umgesetzt werden. Werden bei der mehrfachen Abtastung nach Ablauf der Zeitspanne t2 beziehungsweise nach Ablauf der Zeitspanne t3 nicht identische Buspegel festgestellt, wird ebenfalls auf "ungültig" entschieden und die Decodierung abgebrochen. Alternativ könnte man auch eine Mehrheits-Auswahl treffen, das heißt beispielsweise eine "zwei aus drei" Entscheidung für die Ermittlung des Buspegels treffen.

Abbildung 6.2 zeigt das vollständige Datenfeldes einer Wecknachricht, welches mit Bits Nummer 39 beginnt. Dargestellt sind 8 Bytes, welche nach dem Verfahren ausgewertet werden können, und welche im dargestellten Fall zu einem Weckmuster "0 0 1 1 0 0 1 0" führen.

Eine Busanschlusseinheit, welche das Verfahren ausführt, weist Mittel auf, die geeignet sind, die einzelnen Schritte des Verfahrens durchzuführen. Es ist also eine Busanschlusseinheit für das jeweils zugrundeliegende Bussystem aus dem Stand der Technik um entsprechende Mittel zu ergänzen, sofern diese nicht schon vorhanden sind. Hierzu gehören Mittel, mittels welcher im Ruhezustand Signaleigenschaften wie zum Beispiel Flanken erkannt und gezählt werden. Weiterhin sind zur Ausführung des Verfahrens beispielsweise Mittel vorzuhalten, durch welche Zeitabstände zwischen dem Auftreten bestimmter Signaleigenschaften, beispielsweise zwischen Flanken, ermittelt und abgespeichert werden können, also beispielsweise Zähler in Verbindung mit einem geeigneten Taktgeber und Register oder Speicherzellen. Weiterhin von Vorteil sind Mittel zur Bestimmung des aktuellen Buspegels zu bestimmten Zeitpunkten. Geeignete Mittel zur Durchführung dieser Aufgaben sind aus dem Stand der Technik bekannt und können in Verbindung mit Spannungsreglern, welche die einzelnen Mittel und Bauelemente abhängig von Ausgangssignalen anderer Mittel und Bauelemente mit einer Spannungsversorgung versehen, zu einer Vorrichtung, mit welcher das Verfahren durchgeführt werden kann, zusammengefügt werden. Wenn geeignete Mittel bereits in einer Busanschlusseinheit aus dem Stand der Technik vorhanden sind, genügt es natürlich, lediglich deren Spannungsversorgung entsprechend zu modifizieren, so dass sie im Rahmen des Weckverfahrens selektiv mit Spannung versorgt werden können.

## Patentansprüche

1. Verfahren zum selektiven Aufwecken von im Ruhezustand befindlichen Teilnehmern eines Bussystems,
wobei die nicht im Ruhezustand befindlichen Teilnehmer über den Bus unter Verwendung eines seriellen Kommunikationsprotokolls Nachrichten austauschen, wobei die Nachrichten durch einen führenden Identifier gekennzeichnet sind, wobei die nicht im Ruhezustand befindlichen Teilnehmer anhand des Identifiers entscheiden, ob sie die Nachricht empfangen,
wobei die Nachrichten von den im Ruhezustand befindlichen Teilnehmern in wenigstens drei Phasen ausgewertet werden,
wobei in einer ersten Phase (101, 102) eine Anzahl (N) von Signaleigenschaften und/oder Flanken und/oder Flankenwechseln ermittelt wird,
**dadurch gekennzeichnet, dass** in einer zweiten Phase (109, 110) als Synchronisationsmuster eine Folge von Zeitabständen (T1, T2, ...) zwischen Signaleigenschaften und/oder Flanken und/oder Flankenwechseln ermittelt wird,
wobei in einer dritten Phase (103, 104, 105, 106, 107) als Weckmuster eine Folge von logischen Informationen "0", "1", "ungültig") aus der seriellen Signalfolge der Nachricht ermittelt wird,
wobei durch geeignete Wahl der Anzahl zu zählender Signaleigenschaften und des nachfolgenden Synchronisationsmusters sichergestellt wird, dass bei fehlerhaftem oder zufälligem Durchlaufen dieser beiden Phasen die verbleibende Nachrichtenlänge nicht mehr ausreicht, um das codierte, individuelle Weckmuster aufzunehmen,
und wobei im Ruhezustand befindliche Teilnehmer abhängig von den während der wenigstens drei Phasen ermittelten Informationen den Ruhezustand verlassen (108).

2. Verfahren nach Anspruch 1,
**dadurch gekennzeichnet, dass** die in der ersten Phase zu ermittelnde Anzahl (N) von Signaleigenschaften mit einer vorgegebenen oder vorgebbaren Anzahl von Signaleigenschaften verglichen wird und abhängig vom Ergebnis des Vergleiches der Aufweckvorgang weitergeführt wird, oder nicht.

3. Verfahren nach Anspruch 1 oder 2,
**dadurch gekennzeichnet, dass** die in der zweiten Phase ermittelte Folge von Zeitabständen (T1, T2, ...) und/oder deren Verhältnis mit einer als Synchronisationsmuster vorgegebenen oder vorgebbaren Folge von Zeitabständen und/oder Verhältnissen verglichen wird und abhängig vom Ergebnis des Vergleiches der Aufweckvorgang weitergeführt wird, oder nicht.

4. Verfahren nach Anspruch 3,
**dadurch gekennzeichnet, dass** das Synchronisationsmuster so gewählt wird, dass die dem Synchronisationsmuster entsprechende in der zweiten Phase ermittelte Folge von Zeitabständen (T1, T2, ...) innerhalb einer mit dem Kommunikationsprotokoll konformen Nachricht so darstellbar ist, dass mindestens zwei Zeitabstände oder das Verhältnis zweier der Zeitabstände durch das Protokoll vorgegeben sind.

5. Verfahren nach einem der vorangegangenen Ansprüche,
**dadurch gekennzeichnet, dass** die in der ersten Phase zu ermittelnde Anzahl von Signaleigenschaften (N) und die in der zweiten Phase zu ermittelnde Folge von Zeitabständen (T1, T2, ...) innerhalb einer zum Aufwecken geeigneten Nachricht so vorgegeben wird, dass ein Auftreten der Anzahl und der Folge von Zeitabständen an einer anderen als der vorgesehenen Position innerhalb einer mit dem Kommunikationsprotokoll konformen Nachricht nur möglich ist, wenn aus dieser Nachricht keine vollständige Folge logischer Informationen ("0", "1", "ungültig") für die dritte Phase ermittelt werden kann.

6. Verfahren nach einem der vorangegangenen Ansprüche,
**dadurch gekennzeichnet, dass** die in der ersten Phase zu ermittelnde Anzahl von Signaleigenschaften (N) als die bezogen auf das Kommunikationsprotokoll maximal mögliche Anzahl vorgegeben wird.

7. Verfahren nach einem der vorangegangenen Ansprüche,
**dadurch gekennzeichnet, dass** die in der zweiten Phase zu ermittelnde Folge von Zeitabständen (T1, T2, ...) als die Folge der bezogen auf das Kommunikationsprotokoll kürzest möglichen Zeitabstände vorgegeben wird.

8. Verfahren nach einem der vorangegangenen Ansprüche,
**dadurch gekennzeichnet, dass** zum Ermitteln der in der dritten Phase zu ermittelnden Folge von logischen Informationen ("0", "1", "ungültig") für jede logische Information mehrere Bits einer Nachricht ausgewertet werden, wobei ein weiterer Zeitabstand (t1) zwischen Signaleigenschaften und/oder Flanken und/oder Flankenwechseln bestimmt wird und anschließend der Signalpegel des Busses an einem ersten Abtastzeitpunkt und an einem zweiten Abtastzeitpunkt jeweils wenigstens einmal abgetastet wird,
wobei der zeitliche Abstand (t2) der Position des ersten Abtastzeitpunkts von der letzten zur Bestimmung des weiteren Zeitabstands (t1) herangezogenen Signaleigenschaft (und/oder Flanke und/oder Flankenwechsel) und/oder der zeitliche Abstand (t3) zwischen dem ersten und dem zweiten Abtastzeitpunkt abhängig von dem bestimmten weiteren Zeitabstand (t1) sind,
und wobei abhängig vom Ergebnis der wenigstens zwei Abtastungen die logische Information abgeleitet wird.

9. Verfahren nach Anspruch 8,
**dadurch gekennzeichnet, dass** am ersten und/oder zweiten Abtastzeitpunkt eine Mehrfachabtastung durchgeführt wird, wobei der oder die Zeitabstände (Δt_safe) zwischen den Zeitpunkten der mehrfachen Abtastung kleiner als der Zeitabstand (t3) zwischen dem ersten und dem zweiten Abtastzeitpunkt ist.

10. Verfahren nach Anspruch 8 oder 9,
**dadurch gekennzeichnet, dass** für die Ermittlung jeder einzelnen logischen Information der Folge von logischen Informationen jeweils acht Bits der Nachricht ausgewertet werden.

11. Verfahren nach Anspruch 8 bis 10,
**dadurch gekennzeichnet, dass** der Zeitabstand (t3) zwischen dem ersten und dem zweiten Abtastzeitpunkt ungefähr dem ermittelten weiteren Zeitabstand (t1) entspricht.

12. Verfahren nach Anspruch 8 bis 11,
**dadurch gekennzeichnet, dass** der Zeitabstand (t2) zwischen der letzten zur Bestimmung des weiteren Zeitabstandes (t1) herangezogenen Signaleigenschaft (und/oder Flanke und/oder Flankenwechsel) und dem ersten Abtastzeitpunkt ungefähr dem ermittelten weiteren Zeitabstand (t1) entspricht.

13. Busanschlusseinheit zum selektiven Aufwecken von im Ruhezustand befindlichen Teilnehmern eines Bussystems,
wobei die nicht im Ruhezustand befindlichen Teilnehmer über den Bus unter Verwendung eines seriellen Kommunikationsprotokolls Nachrichten austauschen, wobei die Nachrichten durch einen führenden Identifier gekennzeichnet sind, wobei die nicht im Ruhezustand befindlichen Teilnehmer anhand des Identifiers entscheiden, ob sie die Nachricht empfangen,
**dadurch gekennzeichnet, dass** in der Busanschlusseinheit wenigstens ein Mittel vorgesehen ist, durch welches die Nachrichten von den im Ruhezustand befindlichen Teilnehmern in wenigstens drei Phasen ausgewertet werden,
wobei durch wenigstens eines der Mittel in einer ersten Phase eine Anzahl von Signaleigenschaften und/oder Flanken und/oder Flankenwechseln ermittelt wird, wobei durch wenigstens eines der Mittel in einer zweiten Phase als Synchronisationsmuster eine Folge von Zeitabständen zwischen Signaleigenschaften und/oder Flanken und/oder Flankenwechseln ermittelt wird,
wobei durch wenigstens eines der Mittel in einer dritten Phase ein Weckmuster aus der seriellen Signalfolge der Nachricht ermittelt wird,
wobei durch geeignete Wahl der Anzahl zu zählender Signaleigenschaften und des nachfolgenden Synchronisationsmusters sichergestellt wird, dass bei fehlerhaftem oder zufälligem Durchlaufen dieser beiden Phasen die verbleibende Nachrichtenlänge nicht mehr ausreicht, um das codierte individuelle Weckmuster aufzunehmen,
und wobei im Ruhezustand befindliche Teilnehmer abhängig von den während der wenigstens drei Phasen ermittelten Informationen den Ruhezustand verlassen.

14. Busanschlusseinheit nach Anspruch 13,
**dadurch gekennzeichnet, dass** die einzelnen Mittel separat über geeignete Spannungsregler mit einer Betriebsspannung versorgt werden können.

15. Busanschlusseinheit nach Anspruch 13 oder 14,
**dadurch gekennzeichnet, dass** wenigstens eines der Mittel geeignet ist, wenigstens eines der Verfahren der Ansprüche 2 bis 12 auszuführen.

## Claims

1. Method for selectively waking up subscribers of a bus system that are in the idle state,
wherein the subscribers that are not in the idle state use a serial communication protocol to exchange messages via the bus,
wherein the messages are **characterized by** a leading identifier,
wherein the subscribers that are not in the idle state use the identifier to decide whether they receive the message,
wherein the messages are evaluated by the subscribers that are in the idle state in at least three phases,
wherein a first phase (101, 102) involves a number (N) of signal properties and/or edges and/or edge changes being ascertained,
**characterized in that** a second phase (109, 110) involves a series of time intervals (T1, T2, ...) between signal properties and/or edges and/or edge changes being ascertained as a synchronization pattern,
wherein a third phase (103, 104, 105, 106, 107) involves a series of logic information items ("0", "1", "invalid") being ascertained from the serial signal sequence of the message as a wakeup pattern,
wherein suitable selection of the number of signal properties to be counted and of the subsequent synchronization pattern ensures that, in the event of these two phases being executed erroneously or at random, the remaining message length is no longer sufficient to incorporate the encoded, individual wakeup pattern,
and wherein subscribers that are in the idle state take the information items ascertained during the at least three phases as a basis for leaving the idle state (108).

2. Method according to Claim 1,
**characterized in that** the number (N) of signal properties to be ascertained in the first phase is compared with a prescribed or prescribable number of signal properties and the result of the comparison is taken as a basis for continuing or not continuing the wakeup process.

3. Method according to Claim 1 or 2,
**characterized in that** the series of time intervals (T1, T2, ...) ascertained in the second phase and/or the ratio of said time intervals is/are compared with a series of time intervals and/or ratios that is prescribed or prescribable as a synchronization pattern and the result of the comparison is taken as a basis for continuing or not continuing the wakeup process.

4. Method according to Claim 3,
**characterized in that** the synchronization pattern is selected such that the series of time intervals (T1, T2, ...) that corresponds to the synchronization pattern and was ascertained in the second phase is presentable within a message compliant with the communication protocol such that at least two time intervals or the ratio of two of the time intervals is/are prescribed by the protocol.

5. Method according to one of the preceding claims,
**characterized in that** the number of signal properties (N) to be ascertained in the first phase and the series of time intervals (T1, T2, ...) to be ascertained in the second phase are prescribed within a message suitable for wakeup such that it is possible for the number and the series of time intervals to occur at a different position within a message compliant with the communication protocol from that provided only if a complete series of logic information items ("0", "1", "invalid") cannot be ascertained from this message for the third phase.

6. Method according to one of the preceding claims,
**characterized in that** the number of signal properties (N) to be ascertained in the first phase is prescribed as the maximum possible number based on the communication protocol.

7. Method according to one of the preceding claims,
**characterized in that** the series of time intervals (T1, T2, ...) to be ascertained in the second phase is prescribed as the series of the shortest possible time intervals based on the communication protocol.

8. Method according to one of the preceding claims,
**characterized in that** the series of logic information items ("0", "1", "invalid") to be ascertained in the third phase is ascertained by virtue of multiple bits of a message being evaluated for each logic information item, wherein a further time interval (t1) between signal properties and/or edges and/or edge changes is determined and subsequently the signal level of the bus is sampled at a first sampling time and at a second sampling time, at least once in each case,
wherein the interval of time (t2) between the position of the first sampling time and the last signal property (and/or edge and/or edge change) used for determining the further time interval (t1) and/or the interval of time (t3) between the first and second sampling times is/are dependent on the determined further time interval (t1), and wherein the result of the at least two samplings is taken as a basis for deriving the logic information item.

9. Method according to Claim 8,
**characterized in that** a multiple sampling is performed at the first and/or second sampling time, wherein the time interval(s) (Δt_safe) between the times of the multiple sampling is/are shorter than the time interval (t3) between the first and second sampling times.

10. Method according to Claim 8 or 9,
**characterized in that** eight bits of the message are evaluated for each ascertainment of every single logic information item in the series of logic information items.

11. Method according to Claims 8 to 10,
**characterized in that** the time interval (t3) between the first and second sampling times corresponds approximately to the ascertained further time interval (t1).

12. Method according to Claims 8 to 11,
**characterized in that** the time interval (t2) between the last signal property (and/or edge and/or edge change) used for determining the further time interval (t1) and the first sampling time corresponds approximately to the ascertained further time interval (t1).

13. Bus access unit for selectively waking up subscribers of a bus system that are in the idle state,
wherein the subscribers that are not in the idle state use a serial communication protocol to exchange messages via the bus,
wherein the messages are **characterized by** a leading identifier,
wherein the subscribers that are not in the idle state use the identifier to decide whether they receive the message,
**characterized in that** the bus access unit has at least one means provided in it by means of which the messages are evaluated by the subscribers that are in the idle state in at least three phases, wherein at least one of the means ascertains a number of signal properties and/or edges and/or edge changes in a first phase,
wherein at least one of the means ascertains a series of time intervals between signal properties and/or edges and/or edge changes as a synchronization pattern in a second phase,
wherein at least one of the means ascertains a wakeup pattern from the serial signal sequence of the message in a third phase,
wherein suitable selection of the number of signal properties to be counted and of the subsequent synchronization pattern ensures that, in the event of these two phases being executed erroneously or at random, the remaining message length is no longer sufficient to incorporate the encoded, individual wakeup pattern,
and wherein subscribers that are in the idle state take the information items ascertained during the at least three phases as a basis for leaving the idle state.

14. Bus access unit according to Claim 13, **characterized in that** the individual means can be supplied with an operating voltage separately via suitable voltage regulators.

15. Bus access unit according to Claim 13 or 14,
**characterized in that** at least one of the means is suitable for carrying out at least one of the methods of Claims 2 to 12.

## Revendications

1. Procédé pour le réveil sélectif d'abonnés d'un système de bus se trouvant en état de repos,
les abonnés ne se trouvant pas en état de repos échangeant des messages par le biais du bus en utilisant un protocole de communication de série, les messages étant **caractérisés par** un identifiant conducteur,
les abonnés ne se trouvant pas en état de repos décidant à l'aide de l'identifiant, si ils reçoivent le message,
les messages étant exploités au moins en trois phases par les abonnés se trouvant en état de repos,
dans une première phase (101,102), un nombre (N) de caractéristiques de signal et/ou de flancs et/ou de changements de flancs étant déterminé, **caractérisé en ce que** dans une deuxième phase (109, 110), une suite d'intervalles de temps (T1, T2, ...) étant déterminée en tant que modèle de synchronisation entre les caractéristiques de signal et/ou les flancs et/ou changements de flancs,
dans une troisième phase (103, 104, 105, 106, 107), une suite d'informations logiques ("0", "1", "non valable") étant déterminée en tant que modèle de réveil à partir de la suite de signaux de série du message,
par un choix approprié du nombre de caractéristiques de signal à compter et du modèle de synchronisation ultérieur, il est assuré que pour un passage défectueux ou accidentel de ces deux phases, la longueur de message restante ne suffit plus pour enregistrer le modèle de réveil codé individuel,
et les abonnés se trouvant en état de repos quittant l'état de repos (108) en fonction des informations déterminées pendant les au moins trois phases.

2. Procédé selon la revendication 1,
**caractérisé en ce que** le nombre (N) à déterminer dans la première phase de caractéristiques de signal est comparé à un nombre prédéfini ou prédéfinissable de caractéristiques de signal et l'opération de réveil est transmise ou pas en fonction du résultat de la comparaison.

3. Procédé selon la revendication 1 ou 2,
**caractérisé en ce que** la suite d'intervalles de temps (T1, T2, ...) déterminée dans la deuxième phase et/ou leur rapport est comparé(e) à une suite d'intervalles de temps et/ou de rapports prédéfinie ou prédéfinissable en tant que modèle de synchronisation et l'opération de réveil est transmise ou non en fonction du résultat de la comparaison.

4. Procédé selon la revendication 3,
**caractérisé en ce que** le modèle de synchronisation est choisi de telle manière que la suite d'intervalles de temps (T1, T2, ...) déterminée dans la deuxième phase correspondant au modèle de synchronisation peut être représentée à l'intérieur d'un message conforme au protocole de communication de telle sorte qu'au moins deux intervalles de temps ou le rapport de deux des intervalles de temps sont prédéfinis par le protocole.

5. Procédé selon l'une quelconque des revendications précédentes,
**caractérisé en ce que** le nombre de caractéristiques de signal (N) à déterminer dans la première phase et la suite d'intervalles de temps (T1, T2, ...) à déterminer dans la deuxième phase est prédéfini(e) à l'intérieur d'un message approprié au réveil de telle manière qu'une occurrence du nombre et de la suite d'intervalles de temps à une autre position que celle prévue à l'intérieur d'un message conforme au protocole de communication n'est possible que si aucune suite complète d'informations logiques ("0", "1", "non valable") ne peut être déterminée à partir de ce message pour la troisième phase.

6. Procédé selon l'une quelconque des revendications précédentes,
**caractérisé en ce que** le nombre de caractéristiques de signal (N) à déterminer dans la première phase est prédéfini en tant que nombre possible maximal en référence au protocole de communication.

7. Procédé selon l'une quelconque des revendications précédentes,
**caractérisé en ce que** la suite d'intervalles de temps (T1, T2, ...) à déterminer dans la deuxième phase est prédéfinie en tant que suite des intervalles de temps les plus courts possibles en référence au protocole de communication.

8. Procédé selon l'une quelconque des revendications précédentes,
**caractérisé en ce que** pour déterminer la suite d'informations logiques ("0", "1", "non valable") à déterminer dans la troisième phase pour chaque information logique, plusieurs bits d'un message sont exploités, un autre intervalle de temps (t1) entre les caractéristiques de signal et/ou flancs et/ou changements de flancs étant déterminé et ensuite le niveau de signal du bus étant respectivement analysé au moins une fois à un premier moment d'analyse et à un deuxième moment d'analyse,
l'intervalle de temps (t2) de la position du premier moment d'analyse étant fonction de la dernière caractéristique de signal (et/ou flanc et/ou changement de flanc) introduite pour la détermination de l'autre intervalle de temps (t1) et/ou l'intervalle de temps (t3) entre le premier et le deuxième moment d'analyse étant fonction de l'autre intervalle de temps défini (t1),
et l'information logique étant dérivée en fonction du résultat des au moins deux analyses.

9. Procédé selon la revendication 8,
**caractérisé en ce qu'**une analyse multiple est effectuée au premier et/ou deuxième moment d'analyse, l'intervalle de temps ou les intervalles de temps (Δt_safe) entre les moments de l'analyse multiple étant plus petit(s) que l'intervalle de temps (t3) entre le premier et le deuxième moment d'analyse.

10. Procédé selon la revendication 8 ou 9,
**caractérisé en ce que** pour la détermination de chaque information logique individuelle de la suite d'informations logiques huit bits du message sont respectivement exploités.

11. Procédé selon les revendications 8 à 10,
**caractérisé en ce que** l'intervalle de temps (t3) entre le premier et le deuxième moment d'analyse correspond à peu près à l'autre intervalle de temps déterminé (t1).

12. Procédé selon les revendications 8 à 11,
**caractérisé en ce que** l'intervalle de temps (t2) entre la dernière caractéristique de signal (et/ou flanc et/ou changement de flanc) introduite pour déterminer l'autre intervalle de temps (t1) et le premier moment d'analyse correspond à peu près à l'autre intervalle de temps (t1) déterminé.

13. Unité de connexion à un bus pour le réveil sélectif d'abonnés d'un système de bus se trouvant à l'état de repos,
les abonnés ne se trouvant pas à l'état de repos échangeant des messages par le biais du bus en utilisant un protocole de communication de série, les messages étant **caractérisés par** un identifiant conducteur,
les abonnés ne se trouvant pas à l'état de repos décidant à l'aide de l'identifiant si ils reçoivent le message,
**caractérisée en ce que** dans l'unité de connexion à un bus est au moins prévu un moyen par lequel les messages sont exploités au moins en trois phases par les abonnés se trouvant à l'état de repos,
un nombre de caractéristiques de signal et/ou flancs et/ou changements de flancs étant déterminé par au moins un des moyens dans une première phase,
une suite d'intervalles de temps entre les caractéristiques de signal et/ou flancs et/ou changements de flancs étant déterminée par au moins un des moyens dans une deuxième phase en tant que modèle de synchronisation,
un modèle de réveil étant déterminé par au moins un des moyens dans une troisième phase à partir de la suite de signaux de série du message,
par un choix approprié du nombre de caractéristiques de signal à compter et du modèle de synchronisation ultérieur, il est assuré que pour un passage défectueux ou accidentel de ces deux phases, la longueur du message restante ne suffit plus pour enregistrer le modèle de réveil codé individuel,
et les abonnés se trouvant à l'état de repos quittant l'état de repos en fonction des informations déterminées pendant au moins les trois phases.

14. Unité de connexion à un bus selon la revendication 13,
**caractérisée en ce que** les moyens individuels peuvent être alimentés séparément en une tension de service par un régulateur de tension adapté.

15. Unité de connexion selon la revendication 13 ou 14,
**caractérisée en ce qu'**au moins un des moyens est adapté pour exécuter au moins un des procédés selon les revendications 2 à 12.
